# EUROPÄISCHE PATENTSCHRIFT

(11) **EP 1 666 754 B1**
(45) Veröffentlichungstag und Bekanntmachung des Hinweises auf die Patenterteilung: **08.02.2012**
(21) Anmeldenummer: 05026202.1
(22) Anmeldetag: 01.12.2005
(51) Int. Cl.: F16D 27/04, B25F 5/00, F16D 27/00

(54) **Elektrowerkzeug mit Kupplung**
Electric tool with a clutch
Outil électrique avec un embrayage

(30) Priorität: 06.12.2004 DE 102004059814
(43) Veröffentlichungstag der Anmeldung: 07.06.2006
(73) Patentinhaber: C. & E. Fein GmbH, 73529 Schwäbisch-Gmünd-Bargau (DE); Fraunhofer-Gesellschaft zur Förderung der angewandten Forschung e.V., 80686 München (DE)
(72) Erfinder: Greese, Oliver, 70794 Filderstadt (DE); Kolaric, Ivica, 73730 Esslingen (DE)
(74) Vertreter: Gahlert, Stefan

(56) Entgegenhaltungen:
- WO-A-03/076703
- WO-A-2005/063447
- US-A- 5 135 086
- US-A1- 2003 161 950
- US-B1- 6 167 997

## Beschreibung

Die Erfindung betrifft ein Elektrowerkzeug mit einer Kupplung, mit einem ersten Kupplungselement und einem zweiten Kupplungselement, die relativ zueinander drehbar gelagert sind und zwischen denen ein Drehmoment übertragbar ist, und mit einem Betätigungselement für zumindest eines der beiden Kupplungselemente.

Aus der US 5 159 522 ist eine derartige Kupplung bekannt, die eine Antriebswelle mit einem ersten scheibenförmigen Kupplungselement aufweist, von der das Drehmoment der Antriebswelle über einen Reibbelag auf eine zugeordnete Kupplungsscheibe übertragen werden kann, die mit einer Antriebswelle verbunden ist. Die Kupplung ist als elektromagnetische Kupplung ausgebildet, bei der die Anpresskraft über eine Spule bei geeigneter Ansteuerung über eine Transistorschaltung erzeugt wird.

Eine derartige Kupplung kann für zahlreiche Kupplungsaufgaben eingesetzt werden. Nachteilig ist hierbei jedoch, dass die Kupplung einen erheblichen Strombedarf aufweist, um eine ausreichende Drehmomentübertragung zu bewirken.

Daneben sind zahlreiche andere Kupplungen im Stand der Technik bekannt, die verschiedene Betätigungselemente aufweisen. So sind insbesondere im Kfz-Bereich seit Jahren hydraulisch betätigte Kupplungen bekannt. Darüber hinaus sind z.B. elektromotorisch betätigte Kupplungen und natürlich mechanisch betätigte Kupplungen bekannt, die etwa mittels eines Hebels oder dgl. aktiviert werden.

Aus der prioritätsälteren, jedoch nicht vorveröffentlichten WO 2005/063447 A1 ist zwar eine Spannvorrichtung mit einer schaltbaren Kupplung mit Nanotube-Aktuator bekannt, jedoch betrifft dies kein Elektrowerkzeug.

Vor diesem Hintergrund liegt der Erfindung die Aufgabe zugrunde, ein Elektrowerkzeug mit einer Kupplung zu schaffen, bei der die beiden miteinander zusammenwirkenden Kupplungselemente über ein leicht schaltbares Betätigungselement miteinander in Wirkverbindung gebracht werden können. Hierbei soll der Energiebedarf möglichst niedrig sein. Ferner soll ein schnelles Ansprechen der Kupplung ermöglicht sein, um auch Schaltaufgaben, wie in Elektrowerkzeugen zum Abschalten bei Erreichen eines vorgegebenen Drehmoments übernehmen zu können.

Diese Aufgabe wird erfindungsgemäß bei einem Elektrowerkzeug gemäß der eingangs genannten Art dadurch gelöst, dass das Betätigungselement als leicht schaltbares Betätigungselement mit einem Nanotube-Aktuator ausgebildet ist, mittels dessen die beiden Kupplungselemente miteinander in Wirkverbindung gebracht werden können.

Die Aufgabe der Erfindung wird auf diese Weise vollkommen gelöst. Erfindungsgemäß ermöglicht nämlich durch die Verwendung eines Nanotube-Aktuators für das Betätigungselement ein schnelles Schalten der Kupplung mit einem sehr niedrigen Energieaufwand. Es sind sehr geringe Spannungen ausreichend, um die Kupplung zu betätigen. Die Kupplung lässt sich mit hoher Präzision betätigen und weist eine hohe Zuverlässigkeit im Dauerbetrieb nach zahlreichen Schaltspielen auf. Auch ist die Kupplung zur Übertragung von hohen Drehmomenten in der Größenordnung von 10 Nm und mehr geeignet, wie sie insbesondere bei Elektrowerkzeugen auftreten.

Es ist zwar aus der EP 1 277 905 A2 ein Feststeller zwischen zwei relativ zueinander beweglichen Baugruppen bekannt, bei dem das Betätigungselement von einem Nanotube-Aktuator gebildet ist, jedoch ist die Erfindung hierdurch nicht nahegelegt, da bei einem Feststeller deutlich niedrigere Drehmomente als bei Elektrowerkzeugen auftreten. Außerdem ist hierbei ein Getriebe erforderlich, um das gewünschte Drehmoment zu erzeugen. Somit würde ein Fachmann die Lehre dieses Dokumentes nicht in Betracht ziehen, um eine Kupplung zu entwickeln, die insbesondere zur Verwendung mit einem Elektrowerkzeug geeignet ist.

Die US 5135086 offenbart ein Elektrowerkzeug gemäß dem Oberbegriff des Anspruchs 1.

Die erfindungsgemäße Kupplung kann grundsätzlich einen beliebigen Aufbau aufweisen. Sie kann beispielsweise als Scheibenkupplung, als Kegelreibkupplung, als Backenkupplung, als Zahnkupplung, als Klauenkupplung oder als schaltbare Schlingfederkupplung ausgebildet sein. Auch kann die Kupplung für eine kraftschlüssige und/oder formschlüssige Kraftübertragung ausgebildet sein.

In bevorzugter Weiterbildung der Erfindung weist das Betätigungselement einen Carbon-Nanotube-Aktuator auf.

In vorteilhafter Weiterbildung der Erfindung weist der Nanotube-Aktuator wenigstens eine Schicht auf, in der Nanotubes mit einer Vorzugsrichtung angeordnet sind.

Hierbei kann der Nanotube-Aktuator mindestens eine Schicht mit Single- oder Multiwall Carbon-Nanotubes oder mit Nanotubes aus anderen anorganischen Komponenten, wie etwa BN, MoS₂ oder V₂O₅, aufweisen.

Mit Carbon-Nanotubes lassen sich erheblich größere Kräfte erzeugen, als es mit den bislang bekannten Polymer- und Piezoaktuatoren der Fall ist. Auch können Carbon-Nanotubes mit einer sehr geringen Versorgungsspannung von etwa 1 Volt betrieben werden, während Polymeraktuatoren Versorgungsspannungen von 70 bis 300 Volt und Piezoaktuatoren sogar Versorgungsspannungen von bis zu 1000 Volt erfordern. Auch zeigen Carbon-Nanotubes kein Überschwingverhalten.

Durch die gerichtete Anordnung der Nanotubes mit einer Vorzugsrichtung lässt sich eine Verbesserung der Aktivierungscharakteristik erreichen.

Der Nanotube-Aktuator kann mindestens eine Schicht aufweisen, die mittels eines CVD-Verfahrens strukturierte Nanotubes oder Nanotube-Fasern enthält.

Gemäß einer weiteren bevorzugten Ausgestaltung der Erfindung weist der Nanotube-Aktuator mindestens eine Schicht mit zwischen zueinander parallelen Platten aufgewachsenen Nanotubes auf.

Hierdurch lässt sich eine besonders hohe Leistungsfähigkeit und ein hoher Wirkungsgrad des Aktuators erzielen.

Grundsätzlich ist jedoch auch eine Stapelbauweise des Aktuators aus einzelnen Schichten möglich.

Vorzugsweise ist der Nanotube-Aktuator gemeinsam mit seinem Elektrolyten in einem Gehäuse dichtend aufgenommen ist, wobei eine Volumenausdehnung des Elektrolyten über eine Membran in eine Axialbewegung mindestens eines Kolbens umgesetzt wird.

Da sich der Nanotube-Aktuator bei Anlegen einer Spannung sowohl axial als auch radial ausdehnt, kann so über die hydraulische Übersetzung die Volumenausdehnung in eine Axialbewegung umgesetzt werden, wodurch eine Ausdehnung von beispielsweise 1% in allen drei Richtungen in eine Axialbewegung von etwa 3% umgesetzt werden kann.

Der Nanotube-Aktuator kann etwa aus einer Vielzahl von ringförmigen Scheibenelementen bestehen, die aufeinander gestapelt sind und in Reihe geschaltet sind, wodurch die notwendige Versorgungsspannung reduziert werden kann. Die Anzahl der gestapelten Scheiben (Stapelhöhe) richtet sich nach dem zum Ausrücken der Kupplung notwendigen Hub und der hydraulischen Übersetzung zwischen Nanotube-Aktuator und der Fläche der Kolben, die über die Membran beaufschlagt werden.

In vorteilhafter Weiterbildung der Erfindung ist der Aktuator zum Lösen der beiden Kupplungselemente voneinander angeordnet und wirkt gegen die Wirkung einer Vorspannkraft, über die bei nicht betätigtem Aktuator eine Wirkverbindung zwischen den Kupplungselementen hergestellt ist.

Dies hat den Vorteil, dass die eigentliche Kraftübertragung bei geschlossener Kupplung nicht über den Nanotube-Aktuator, sondern über die Vorspannkraft erzeugt wird, wobei es sich beispielsweise um eine geeignet dimensionierte Feder handeln kann.

Ein erfindungsgemäßes Elektrowerkzeug weist eine Antriebswelle und eine Abtriebswelle auf, zwischen denen zur Kraftübertragung eine Kupplung der erfindungsgemäßen Art vorgesehen ist. Dabei ist der Aktuator zur Axialbewegung der Kupplungselemente relativ zueinander ausgebildet und wirkt gegen eine Rückstellkraft zwischen den Kupplungselementen.

Hierbei sind die Kupplungselemente vorzugsweise durch die Rückstellkraft in eine Schließstellung beaufschlagt, wobei der Aktuator zur Relativbewegung der beiden Kupplungselemente in eine Lösestellung ausgebildet ist, in der eine Kraftübertragung zwischen den Kupplungselementen unterbrochen ist.

Dies hat den Vorteil, dass der Nanotube-Aktuator lediglich zum Öffnen der Wirkverbindung zwischen den beiden Kupplungselementen betätigt werden muss.

Der Aktuator ist in vorteilhafter Weiterbildung der Erfindung über eine Schleifkontakt-Verbindung mit Spannung beaufschlagbar.

Die Kupplung kann beispielsweise als Scheiben-Kupplung ausgebildet sein, wobei mindestens eines der Kupplungselemente einen Reibbelag zur Kraftübertragung aufweist.

In vorteilhafter Weiterbildung des erfindungsgemäßen Elektrowerkzeuges ist die Abtriebswelle an einem Ende auf der Antriebswelle drehbar gelagert und weist ein erstes Kupplungselement auf, dem ein zweites mit der Antriebswelle drehfest verbundenes Kupplungselement zugeordnet ist, das über den Aktuator zum Ausrücken der beiden Kupplungselemente in eine Offenstellung axial verschiebbar ist.

Auf diese Weise ist ein einfacher, kompakter und zuverlässiger Aufbau gewährleistet.

Natürlich ist grundsätzlich auch die umgekehrte Wirkrichtung möglich, wonach der Nanotube-Aktuator bei Aktivierung durch Anlegen einer Spannung ein Schließen der Kupplung bewirkt.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind.

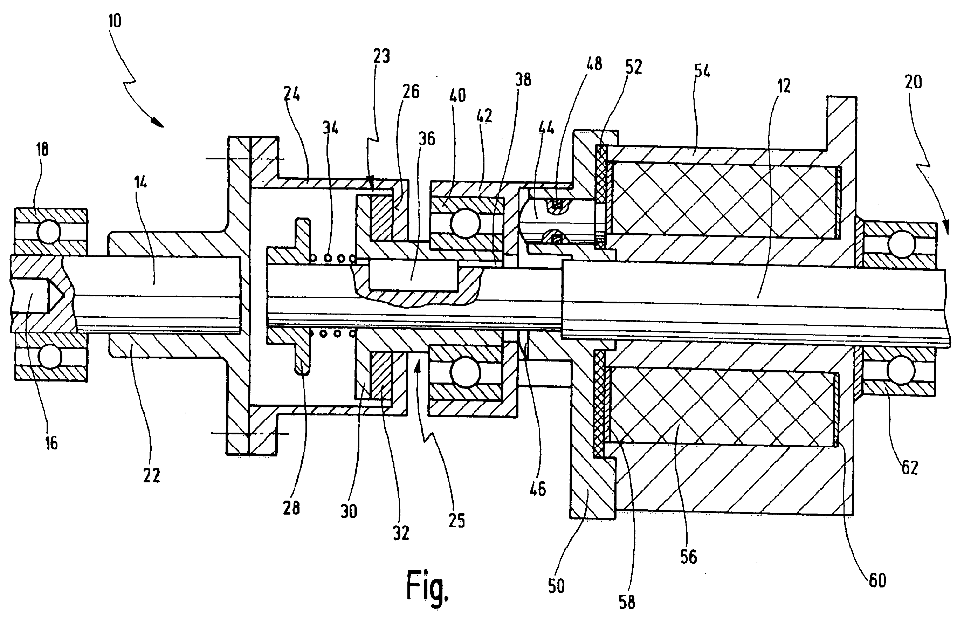

Weitere Merkmale und Vorteile der Erfindung ergeben sich aus der nachfolgenden Beschreibung eines bevorzugten Ausführungsbeispiels unter Bezugnahme auf die Zeichnung. Die einzige Figur zeigt ein erfindungsgemäßes Elektrowerkzeug mit einer Kupplung in vereinfachter Darstellung.

In der Figur ist ein erfindungsgemäßes Elektrowerkzeug vereinfacht dargestellt und insgesamt mit der Ziffer 10 bezeichnet. Es kann sich hierbei beispielsweise um einen Schrauber handeln, der mit einer drehmomentabhängig elektrisch geschalteten Kupplung versehen ist, die insgesamt mit der Ziffer 23 angedeutet ist. Mit einem solchen Schrauber kann beispielsweise eine Verschraubung mit einem präzisen Drehmoment angezogen werden. Hierzu kann ein Drehmoment-Sensor vorgesehen sein (nicht dargestellt) über den die Kupplung 23 bei Erreichen eines vorgegebenen Drehmomentes ausgelöst wird, um Drehmomentübertragung zu unterbrechen.

Das erfindungsgemäße Elektrowerkzeug 10 weist eine Antriebswelle 12 auf, die von einem lediglich mit der Ziffer 20 angedeuteten Elektromotor ggf. unter Zwischenschaltung eines Getriebes angetrieben ist. Die Drehbewegung der Antriebswelle 12 kann über die Kupplung 23 auf eine Abtriebswelle 14 übertragen werden, an der ein Werkzeug befestigt werden kann, wozu schematisch eine Werkzeugaufnahme 16 angedeutet ist.

Die Abtriebswelle 14 ist werkzeugseitig mittels eines Lagers 18 gelagert und ist an ihrem der Antriebswelle 12 zugewandten Ende mit einem Flansch 22 drehfest verbunden. Mit dem Flansch 22 ist ein erstes hülsenförmiges Kupplungselement 24 der Kupplung 23 verschraubt. Auf dem der Abtriebswelle 14 zugewandten Abschnitt der Antriebswelle 12 ist ein zweites Kupplungselement 30, das mit der Antriebswelle 12 drehfest verbunden ist, axial verschieblich gelagert. Das zweite Kupplungselement 30 ist gleichfalls flanschförmig ausgebildet und ist auf der Oberfläche der Antriebswelle 12 axial verschieblich geführt.

Zur drehfesten Verbindung mit der Antriebswelle 12 ist eine in der Antriebswelle 12 aufgenommene Passfeder 36 vorgesehen, die in eine Aufnahmenut 38 des zweiten Kupplungselementes 30 verschieblich eingreift. Das zweite Kupplungselement 30 umfasst einen scheibenförmigen Reibbelag 32, der mit einer zugeordneten Reibfläche 26 des ersten Kupplungselementes zusammenwirkt, um eine kraftschlüssige Drehmomentübertragung zwischen den beiden Kupplungselementen 24, 30 zu ermöglichen.

Das erste Kupplungselement 24,liegt mit einer zentralen Bohrung auf der Außenoberfläche eines zylindrischen Abschnittes des ersten Kupplungselementes 30 auf und ist somit daran drehbar geführt. Am der Abtriebswelle 14 gegenüberliegenden Ende der Antriebswelle 12 eine Buchse 28 befestigt. Zwischen der Buchse 28 und der dieser zugewandten Stirnfläche des zweiten Kupplungselementes 30 ist ein Federelement 34 angeordnet, durch das das zweite Kupplungselement 30 in Richtung auf die Reibfläche 26 des ersten Kupplungselementes 24 vorgespannt ist. Das Federelement 34 kann beispielsweise, wie dargestellt, als Schraubenfeder ausgebildet sein oder als Tellerfeder oder dgl. Durch das Federelement 34 wird die Reibfläche 32 des zweiten Kupplungselementes 30 gegen die damit zusammenwirkende Reibfläche 26 des ersten Kupplungselementes 24 vorgespannt, so dass die Anpresskraft zur Drehmomentübertragung durch die Stärke des Federelementes 34 vorgegeben ist.

Die Kupplung 23 weist ein insgesamt mit der Ziffer 25 angedeutetes Betätigungselement auf, das erfindungsgemäß einen Nanotube-Aktuator 56 aufweist. Der Nanotube-Aktuator 56 ist zusammen mit einem Elektrolyten dichtend in einem Gehäuse 54 aufgenommen, das einen der Abtriebswelle 14 abgewandten Abschnitt der Antriebswelle 12 koaxial umschließt.

Der Nanotube-Aktuator 56 dehnt sich bei Anlegen einer Spannung in alle drei Richtungen aus, was zur Verdrängung des Elektrolyten führt, der auf der der Kupplung zugewandten Seite über eine Dichtung (Membran) 52 abgedichtet ist. An dieser Membran 52 stützen sich drei Kolben 44 ab, deren Axialverschiebung auf ein Lagergehäuse 42 übertragen wird. Über ein darin gehaltenes Lager 40 wird die Bewegung in eine Axialverschiebung des zweiten Kupplungselementes 30 in eine Richtung entgegen der Wirkung des Federelementes 34 umgesetzt. Eine Ausdehnung des Nanotube-Aktuators 56 führt somit zu einer Axialverschiebung des zweiten Kupplungselementes 30 in eine Löserichtung, so dass die Wirkverbindung zwischen dem Reibelement 32 und der zugeordneten Reibfläche 26 getrennt wird und die Kupplung 23 somit geöffnet wird.

Durch die hydraulische Übersetzung mit Hilfe des Elektrolyten wird die Volumenausdehnung des Nanotube-Aktuators 56 in allen drei Raumrichtungen in eine Axialbewegung umgesetzt.

Das Gehäuse 54 für den Nanotube-Aktuator 56 stützt sich auf der der Abtriebswelle 14 abgewandten Seite der Antriebswelle 12 an einem Lager 62 ab und weist einen ringförmigen Hohlraum auf, in dem der Nanotube-Aktuator 56 aufgenommen ist. Der Nanotube-Aktuator 56 weist zwischen zwei endseitigen Platten 58, 60 mittels eines CVD-Verfahrens gerichtet aufgewachsene Carbon-Nanotubes auf oder besteht, wie vorstehend erwähnt, aus gestapelten Carbon-Nanotubes in Form von Ringscheiben. Bei dem Elektrolyten kann es sich um Lösungen von Alkali-Erdalkali-, Aluminium- und Metallsalzen der Halogenide, von Nitraten, Sulfaten, Phosphaten, Dihydrogenphosphaten, Hydrogenphosphaten, Halogenaten, Perhalogenaten, Hydroxyden, Acetaten, Olaxaten oder deren Säuren oder Mischungen handeln.

Beispielsweise kann eine wässrige Lösung von Na₂SO₄ oder Na₂HPO₄ oder Na₃PO₄ oder von KCl verwendet werden, wobei die Konzentration beispielsweise zwischen 0,1 Mol und 1 Mol variiert werden kann. Große Maximalkräfte werden mit etwa mit 1 Mol KC1 und 1 Mol Na₂SO₄ erzielt.

Auf der dem Lager 62 abgewandten Seite ist der Nanotube-Aktuator 56 durch die Dichtung 52 nach außen hin abgedichtet, die als Membran auf die drei zugeordneten Kolben 44 wirkt. Das Gehäuse 54 ist unter Zwischenlage der Dichtung 52 mit einem Deckel 50 verschraubt, in dem die Kolben 44 aufgenommen sind. Dabei können beispielsweise drei Kolben 40 vorgesehen sein, die in gleichmäßigen Winkelabständen von 120° voneinander beabstandet und gegenüber der Längsachse der Antriebswelle 12 radial nach außen versetzt achsparallel dazu angeordnet sind. In der Figur ist ein Kolben 44 in der oberen Bildhälfte erkennbar und weiter unten lediglich ein Teil eines weiteren Kolbens 46. Die Kolben 44, 46 sind in Axialbohrungen des Deckels 50 längs verschieblich aufgenommen und stützen sich am stirnseitigen Ende des Nanotube-Aktuators 56 bzw. an der Dichtung (Membran) 52 ab.

Durch O-Ring-Dichtungen 48 sind die Kolben 44 gegenüber ihren Aufnahmebohrungen innerhalb des Deckels 50 abgedichtet. So ergibt sich insgesamt eine vollständige Abdichtung des Nanotube-Aktuators innerhalb des Gehäuses 54 und des Deckels 50 nach außen. Die Platten 58, 60 des Nanotube-Aktuators 56 sind in geeigneter Weise über Schleifkontakte (nicht dargestellt) mit einer externen Spannungsquelle verbindbar, um den Nanotube-Aktuator aktivieren zu können.

Die Kolben 44, 46 übertragen eine spannungsinduzierte Verschiebung auf die Stirnfläche des Lagergehäuses 42, innerhalb dessen das zweite Kupplungselement 30 mittels eines als Kugellager ausgebildeten Lagers 40 gelagert ist.

Eine Axialverschiebung der Kolben 44, 46 wird somit unmittelbar in eine Ausrückbewegung des zweiten Kupplungselementes 30 umgesetzt.

Da der Nanotube-Aktuator 56 bereits auf geringe Spannungsimpulse in der Größenordnung von 1 Volt sehr schnell anspricht, kann auf diese Weise ein äußerst präzises und schnelles Ansprechen der Kupplung 23 gewährleistet werden, um eine Ausrückbewegung oder ein Schließen der Kupplung 23 zu erzielen.

## Patentansprüche

1. Elektrowerkzeug (10) mit einer Kupplung, mit einem ersten Kupplungselement (24) und einem zweiten Kupplungselement (30), die relativ zueinander drehbar gelagert sind und zwischen denen ein Drehmoment übertragbar ist, und mit einem Betätigungselement (25) für zumindest eines der beiden Kupplungselemente (24, 30), **dadurch gekennzeichnet, dass** das Betätigungselement (25) als leicht schaltbares Betätigungselement mit einem Nanotube-Aktuator (56) ausgebildet ist, mittels dessen die beiden Kupplungselemente (24, 30) miteinander in wirkverbindung gebracht werden können

2. Elektrowerkzeug nach Anspruch 1, **dadurch gekennzeichnet, dass** die Kupplung (24, 30) als Scheibenkupplung, als Kegelreibkupplung, als Backenkupplung, als Zahnkupplung, als Klauenkupplung oder als schaltbare Schlingfederkupplung ausgebildet ist.

3. Elektrowerkzeug nach Anspruch 1 oder 2, **dadurch gekennzeichnet, dass** die Kupplungselemente (24, 30) für eine kraftschlüssige Kraftübertragung ausgebildet sind.

4. Elektrowerkzeug nach einem der vorhergehenden Ansprüche, **dadurch gekennzeichnet, dass** die Kupplungselemente für eine formschlüssige Kraftübertragung ausgebildet sind.

5. Elektrowerkzeug nach Anspruch 1 oder 2, **dadurch gekennzeichnet, dass** das Betätigungselement (25) einen Carbon-Nanotube-Aktuator (56) aufweist.

6. Elektrowerkzeug nach einem der vorhergehenden Ansprüche, **dadurch gekennzeichnet, dass** der Nanotube-Aktuator (56) wenigstens eine Schicht aufweist, in der Nanotubes mit einer Vorzugsrichtung angeordnet sind.

7. Elektrowerkzeug nach einem der vorhergehenden Ansprüche, **dadurch gekennzeichnet, dass** der Nanotube-Aktuator (56) mindestens eine Schicht mit Single- oder Multiwall Carbon-Nanotubes oder mit Nanotubes aus anderen anorganischen Komponenten, wie etwa BN, MoS₂ oder V₂O₅, aufweist.

8. Elektrowerkzeug nach einem der vorhergehenden Ansprüche, **dadurch gekennzeichnet, dass** der Nanotube-Aktuator (56) mindestens eine Schicht mit zwischen zueinander parallelen Platten (58, 60) aufgewachsenen Nanotubes enthält.

9. Elektrowerkzeug nach einem der vorhergehenden Ansprüche, **dadurch gekennzeichnet, dass** der Nanotube-Aktuator (56) mindestens eine Schicht mit mittels eines CVD-Verfahrens strukturierten Nanotubes oder Nanotube-Fasern enthält.

10. Elektrowerkzeug nach einem der vorhergehenden Ansprüche, **dadurch gekennzeichnet, dass** der Nanotube-Aktuator mit einem Elektrolyten in einem Gehäuse (54) dichtend aufgenommen ist und dass eine volumenausdehnung des Elektrolyten über eine Membran (52) in eine Axialbewegung mindestens eines Kolbens (44) umgesetzt wird.

11. Elektrowerkzeug nach einem der vorhergehenden Ansprüche, **dadurch gekennzeichnet, dass** der Nanotube-Aktuator (56) zum Lösen der beiden Kupplungselemente (24, 30) voneinander angeordnet ist und gegen die Wirkung einer Vorspannkraft wirkt, über die bei nicht betätigtem Aktuator (56) eine Wirkverbindung zwischen den Kupplungselementen (24, 30) hergestellt ist.

12. Elektrowerkzeug nach Anspruch 11, **dadurch gekennzeichnet, dass** das erste (24) und zweite (30) Kupplungselement über ein Federelement (34) gegeneinander in eine Schließstellung beaufschlagt sind, in der eine Kraftübertragung zwischen den Kupplungselementen (24, 30) erfolgt.

13. Elektrowerkzeug nach einem der vorhergehenden Ansprüche, **gekennzeichnet durch** eine Antriebswelle (12) und eine Abtriebswelle (14), zwischen denen zur Kraftübertragung die Kupplung (23) vorgesehen ist, wobei der Nanotube-Aktuator (56) zur Axialbewegung der Kupplungselemente (24, 30) relativ zueinander ausgebildet ist und gegen eine Rückstellkraft zwischen den Kupplungselementen (24, 30) wirkt.

14. Elektrowerkzeug nach Anspruch 13, **dadurch gekennzeichnet, dass** die Kupplungselemente (24, 30) durch die Rückstellkraft in eine Schließstellung beaufschlagt sind, wobei der Aktuator (56) zur Relativbewegung der beiden Kupplungselemente (24, 30) in eine Lösestellung ausgebildet ist, in der eine Kraftübertragung zwischen den Kupplungselementen (24, 30) unterbrochen ist.

15. Elektrowerkzeug nach einem der vorhergehenden Ansprüche, **dadurch gekennzeichnet, dass** der Aktuator (56) über eine Schleifkontakt-Verbindung mit Spannung beaufschlagbar ist.

16. Elektrowerkzeug nach einem der vorhergenden Ansprüche, **dadurch gekennzeichnet, dass** die Kupplung (23) als Scheiben-Kupplung ausgebildet ist, wobei mindestens eines (24) der Kupplungselemente (24, 30) einen Reibbelag (32) zur Kraftübertragung aufweist.

17. Elektrowerkzeug nach einem der Ansprüche 13 bis 16, **dadurch gekennzeichnet, dass** die Abtriebswelle (14) an einem Ende auf der Antriebswelle (12) drehbar gelagert ist und ein erstes Kupplungselement (24) aufweist, dem ein zweites mit der Antriebswelle (12) drehfest verbundenes Kupplungselement (30) zugeordnet ist, das über den Nanotube-Aktuator (56) zur Ausrücken der beiden Kupplungselemente (24, 30) in eine Offenstellung axial verschiebbar ist.

## Claims

1. A power tool (10) having a clutch, comprising a first clutch element (24) and a second clutch element (30), which are seated for rotation one relative to the other and between which a torque can be transmitted, and further comprising an actuating element (25) for at least one of the two clutch elements (24, 30), **characterized in that** the actuating element (25) is configured as an easily switchable actuating element comprising a nanotube actuator (56) by means of which the two clutch elements (24, 30) can be brought together into engagement.

2. The power tool as defined in claim 1, **characterized in that** the clutch (23, 30) is configured as disk clutch, as cone friction clutch, as jaw clutch, as gear clutch, as dog clutch or as switchable overrunning-spring clutch.

3. The power tool as defined in claim 1 or claim 2, **characterized in that** the clutch elements (24, 30) are designed for force-locking power transmission.

4. The power tool as defined in any of the preceding claims, **characterized in that** the clutch elements are designed for form-locking power transmission.

5. The power tool as defined in claim 1 or claim 2, **characterized in that** the actuating element (25) comprises a carbon nanotube actuator (56).

6. The power tool as defined in any of the preceding claims, **characterized in that** the nanotube actuator (56) comprises at least one layer in which nanotubes are arranged with preferred orientation.

7. The power tool as defined in any of the preceding claims, **characterized in that** the nanotube actuator (56) comprises at least one layer with single-wall or multi-wall carbon nanotubes or nanotubes consisting of other inorganic components, such as BN, MoS₂ or V₂O₅.

8. The power tool as defined in any of the preceding claims, **characterized in that** the nanotube actuator (56) comprises at least one layer with nanotubes epitaxially grown between mutually parallel plates (58, 60).

9. The power tool as defined in any of the preceding claims, **characterized in that** the nanotube actuator (56) comprises at least one layer comprising nanotubes or nanotube fibers structured by a CVD process.

10. The power tool as defined in any of the preceding claims, **characterized in that** the nanotube actuator, together with an electrolyte, are sealingly received in a housing (54), and that any expansion in volume of the electrolyte is converted via a diaphragm (52) into an axial movement of at least one piston (44).

11. The power tool as defined in any of the preceding claims, **characterized in that** the nanotube actuator (56) is arranged for disengaging the two clutch elements (24, 30) and acts against the action of a biasing force by which active engagement of the clutch elements (24, 30) is achieved when the actuator (56) is in its inoperative condition.

12. The power tool as defined in claim 11, **characterized in that** the first (24) and the second (30) clutch elements are urged by a spring element (34) into an engaged position one relative to the other in which power transmission between the clutch elements is effected.

13. The power tool as defined in any of the preceding claims, **characterized by** a drive shaft (12) and an output shaft (14) between which a clutch (23) according to any of clams 1 to 11 is provided for power transmission, the nanotube actuator (56) being designed to produce an axial movement of the clutch elements (24, 30) one relative to the other, and acting against a restoring force acting between the clutch elements (24, 30).

14. The power tool as defined in claim 13, **characterized in that** the clutch elements (24, 30) are urged into a closed position by the restoring force, the actuator (56) being designed to move the two clutch elements (24, 30) one relative to the other into a disengaged position in which power transmission between the clutch elements (24, 30) is interrupted.

15. The power tool as defined in any of the preceding claims **characterized in that** voltage can be applied to the actuator (56) via a sliding-contact connection.

16. The power tool as defined in any of the preceding claims, **characterized in that** the clutch (23) is designed as a disk clutch with at least one (24) of the clutch elements (24, 30) comprising a friction lining (32) for power transmission.

17. The power tool as defined in any of claims 13 to 16, **characterized in that** the output shaft (14) has one end rotatably seated on the drive shaft (12) and comprises a first clutch element (24) and an associated second clutch element (30), connected for common rotation with the drive shaft (12), that can be axially displaced via the nanotube actuator (56) for disengaging the two clutch elements (24, 30) and for transferring them to an open position.

## Revendications

1. Outil électrique (10) doté d'un accouplement présentant un premier élément d'accouplement (24) et un deuxième élément d'accouplement (30) montés à rotation l'un par rapport à l'autre et entre lesquels un couple de rotation peut être transmis, et d'un élément d'actionnement (25) prévu pour au moins l'un des deux éléments d'accouplement (24, 30), **caractérisé en ce que**
l'élément d'actionnement (25) est configuré comme élément d'actionnement aisément commutable doté d'un actionneur (56) à nanotubes au moyen duquel les deux éléments d'accouplement (24, 30) peuvent être amenés à coopérer mutuellement.

2. Outil électrique selon la revendication 1, **caractérisé en ce que** l'accouplement (24, 30) est configuré comme accouplement à disque, comme accouplement à cône de friction, comme accouplement à mâchoires, comme accouplement denté, comme accouplement à griffes ou comme accouplement à ressort torsadé commutable.

3. Outil électrique selon la revendication 1 ou 2, **caractérisé en ce que** les éléments d'accouplement (24, 30) sont configurés pour transférer des forces en correspondance mécanique.

4. Outil électrique selon l'une des revendications précédentes, **caractérisé en ce que** les éléments d'accouplement sont configurés pour un transfert de force en correspondance géométrique.

5. Outil électrique selon la revendication 1 ou 2, **caractérisé en ce que** l'élément d'actionnement (25) présente un actionneur (56) à nanotubes de carbone.

6. Outil électrique selon l'une des revendications précédentes, **caractérisé en ce que** l'actionneur (56) à nanotubes présente au moins une couche dans laquelle des nanotubes sont disposés dans une direction préférentielle.

7. Outil électrique selon l'une des revendications précédentes, **caractérisé en ce que** l'actionneur (56) à nanotubes présente au moins une couche de nanotubes de carbone à paroi simple ou multiple ou de nanotubes en autres composants minéraux, par exemple BN, MoS₂ ou V₂O₅.

8. Outil électrique selon l'une des revendications précédentes, **caractérisé en ce que** l'actionneur (56) à nanotubes contient au moins une couche de nanotubes que l'on fait croître entre des plaques (58, 60) parallèles l'une à l'autre.

9. Outil électrique selon l'une des revendications précédentes, **caractérisé en ce que** l'actionneur (56) à nanotubes contient au moins une couche de nanotubes structurés au moyen d'un procédé de CVD ou une couche de fibres de nanotubes.

10. Outil électrique selon l'une des revendications précédentes, **caractérisé en ce que** l'actionneur à nanotubes est repris de manière étanche dans un boîtier (54) qui contient également un électrolyte et **en ce qu'**une augmentation du volume de l'électrolyte est convertie par l'intermédiaire d'une membrane (52) en un déplacement axial d'au moins un piston (44).

11. Outil électrique selon l'une des revendications précédentes, **caractérisé en ce que** l'actionneur (56) à nanotubes est disposé en vue de libérer les deux éléments d'accouplement (24, 30) l'un de l'autre et agit en opposition à l'effet d'une force de précontrainte par laquelle une liaison fonctionnelle est établie entre les éléments d'accouplement (24, 30) lorsque l'actionneur (56) n'est pas actionné.

12. Outil électrique selon la revendication 11, **caractérisé en ce que** le premier élément d'accouplement (24) et le deuxième élément d'accouplement (30) sont sollicités par un élément élastique (34) l'un vers l'autre dans une direction de fermeture dans laquelle un transfert de force a lieu entre les éléments d'accouplement (24, 30).

13. Outil électrique selon l'une des revendications précédentes, **caractérisé par** un arbre d'entraînement (12) et un arbre entraîné (14) entre lesquels l'accouplement (23) est prévu pour transférer des forces, l'actionneur (56) à nanotubes étant configuré pour déplacer axialement les éléments d'accouplement (24, 30) l'un par rapport à l'autre et agissant entre les éléments d'accouplement (24, 30) en opposition à une force de rappel.

14. Outil électrique selon la revendication 13, **caractérisé en ce que** les éléments d'accouplement (24, 30) sont sollicités par la force de rappel dans une position de fermeture, l'actionneur (56) étant configuré pour déplacer les deux éléments d'accouplement (24, 30) l'un par rapport à l'autre dans une position de libération dans laquelle le transfert de force entre les éléments d'accouplement (24, 30) est interrompu.

15. Outil électrique selon l'une des revendications précédentes, **caractérisé en ce qu'**une tension peut être appliquée sur l'actionneur (56) par l'intermédiaire d'une liaison à contact coulissant.

16. Outil électrique selon l'une des revendications précédentes, **caractérisé en ce que** l'accouplement (23) est configuré comme accouplement à disque, au moins l'un (24) des éléments d'accouplement (24, 30) présentant une couche de friction (32) en vue du transfert de forces.

17. Outil électrique selon l'une des revendications 13 à 16, **caractérisé en ce qu'**une extrémité de l'arbre entraîné (14) est montée à rotation sur l'arbre d'entraînement (12) et présente un premier élément d'accouplement (24) auquel est associé un deuxième élément d'accouplement (30) qui est relié à rotation solidaire à l'arbre d'entraînement (12) et qui peut être glissé axialement dans une position d'ouverture par l'intermédiaire de l'actionneur (56) à nanotubes en vue d'écarter l'un de l'autre les deux éléments d'accouplement (24, 30).
